# EUROPEAN PATENT APPLICATION

(11) **EP 3 618 234 A1**
(43) Date of publication of application: **04.03.2020**
(21) Application number: 18191518.2
(22) Date of filing: 29.08.2018
(51) Int. Cl.: H02K 1/27

(54) **MAGNET ARRANGEMENT FOR AN ELECTRIC GENERATOR**

(71) Applicant: Siemens Gamesa Renewable Energy A/S, 7330 Brande (DK)
(72) Inventor: Airoldi, Giovanni, 5614 BG Eindhoven (NL)
(74) Representative: Aspacher, Karl-Georg

(57) **Abstract**

Magnet arrangement for an electric generator (7), comprising at least one magnet (15) arranged on a base plate (14) and a fixation cover (16) fixed to the base plate (14) and covering the magnet (15) on its upper surface (20) for holding it in place, characterized in that the cover (15) covers the magnet (15) having a convex and/or angled upper surface (20) sloping to both sides of the magnet (15) only in the sloping side regions (22) while the center region (19) of the magnet (15) is uncovered.

## Description

The invention relates to a magnet arrangement for an electric generator, comprising at least one magnet arranged on a base plate and a fixation cover fixed to the base plate and covering the magnet on its upper surface for holding it in place.

Modern permanent magnet generators (PMG) use permanent magnets for creating the magnetic excitation field. These generators are popular especially in large appliances, for example in electric generators used in wind turbines. Commonly the magnet arrangement respectively the permanent magnets are arranged at the rotor rotating relative to a fixed stator. In large appliances respective large magnets are used. The larger the generator, the greater the number of magnets. In large appliances magnet modules are used, with each magnet module comprising more than one separate magnet, for example four magnets. Several hundred of these magnet modules need to be installed.

For installing the magnets respective magnet arrangements are used. A magnet arrangement comprising at least one magnet, which is arranged on a base plate, to which it is for example glued. This base plate also serves as a mounting plate. For protecting the magnet arranged on the base plate and for holding it in place the magnet is encapsulated in a cover, usually a stainless steel cover, withstanding the radial and circumferential loads to which the magnet is subjected. The cover of known magnet arrangements cover the whole upper surface of the magnet, which upper surface is directed to the stator arrangement. Although the cover provides protection, it also increases the electromagnetic air gap between the rotor and the stator, which increases the electromagnetic reluctance of the air gap and which in turn reduces the power output of the generator for a given input torque.

It is an object of the invention to provide an improved magnet arrangement.

For solving the problem, the invention provides a magnet arrangement for an electric generator as depicted above, which is characterized in that the cover covers the magnet having a convex or angled upper surface sloping to both sides of the magnet only in the sloping side regions while the center region of the magnet is uncovered.

The cover of the inventive magnet arrangement does not cover the whole upper surface which is directed to the air gap, as in prior art arrangements. The inventive cover covers the magnet only in the side regions, so that the magnet is mechanically fixed to the base plate via the cover only in these overlapping side regions, while the center region is uncovered. The upper surface of the magnet is convex or angled, so that the surface slopes to both sides of the magnet. This design of the magnet is advantageous to avoid negative influences on the magnetic field and to avoid torque ripples. According to the invention the overlapping parts of the cover are arranged in these sloped side areas. Therefore, the uncovered surface of the center region is closer to the opposite generator means than the cover arranged in the sloped side regions. This allows for the reduction of the mechanical and electromagnetic air gap, resulting in a significant increase of the generators performance. As the cover, usually a stainless steel cover, has a thickness of between 0.5 to 0.7 mm, and as this cover is not present in the center region, it is possible to reduce the air gap by at least the thickness of the cover, for example for about 0.5 - 0.7 mm. The reduction of approximately 0.5 mm of the air gap would lead to a torque increase in the range of 1 - 2 % depending on the diameter of the generator.

So, the inventive magnet arrangement allows for a safe fixation of the magnet on the base plate due to the overlap in the side regions, and it also allows for reducing the air gap and therefore for significantly enhancing the generator performance.

The smaller the overlap, the larger is the uncovered surface area, which is advantageous for the overall magnetic field and thus the generator performance. The cover should overlap the magnet in each side region for less than 20 % of the total width of the magnet, especially for less than 10 % and preferably for less than 5 % of the total width of the magnet. In fact, only a few millimeters or centimeters of overlap are sufficient for safely retaining the magnet on the base plate, while a very large uncovered surface area is provided. It is certainly possible to additionally glue the magnet to the base plate to further enhance the magnet retention.

In a very advantageous embodiment of the invention the side edges of the cover are tapered. This allows for the cover to smoothly taper off on the surface without sharp edges, so that an almost edge-free transition area from the cover to the uncovered magnet surface can be realized.

As mentioned above, large generators need a high number of magnets respectively magnet arrangements. Therefore, also the inventive magnet arrangement may comprise not only one magnet, but two or more magnets having the same geometry, with all magnets being arranged on a common base plate and which are all covered by one common cover. The magnets are arranged in a row on a base plate, with their surfaces having the same geometry, thus the surfaces slope down to the same sides. The cover can therefore easily cover all magnets, so that a very compact magnet arrangement can be realized. In large generators several hundred of these magnet modules are installed, for example 864 separate magnet arrangements or magnet modules, with each comprising for example four magnets. Therefore, 3456 magnets are used. The magnet arrangements are arranged on the circumference of the respective generator part, either the rotor or the stator.

The cover preferably has a thickness between 0.4 - 1 mm, especially between 0.5 - 0.7 mm and is made of metal, preferably stainless steel. It is preferably welded to the base plate, while certainly also other means for fixing it to the base plate are possible.

As depicted above, the magnet arrangements in the prior art comprise covers which completely cover the magnet surface. This complete coverage also serves as a protection against corrosion of the magnet. As the inventive magnet arrangement is characterized in that the cover overlaps the magnet only in the sloped side regions, so that the center region is uncovered, it is very advantageous to apply a corrosion protective coating at least to the uncovered surface of the or of each magnet. This protective coating may for example be a paint or a lacquer or a polymer coating, which coating is applied as a very thin layer. With this coating corrosion protection can be realized, while at the same time due to the fixation only in the side regions the air gap can be reduced.

Finally, the cover may also cover the front surfaces of the one or the terminal magnets, so that a complete housing except for the uncovered center region is realized.

The invention also relates to a generator comprising several magnet arrangements as depicted above. The magnet arrangements may either be arranged at the rotor or at the stator depending on the type of the generator.

Finally, the invention relates to a wind turbine comprising a generator as depicted above.

Further advantages of the invention become apparent from the following description of an embodiment of the invention and the accompanying drawings. The drawings show:
- Figure 1: shows a principle view of a wind turbine,
- figure 2: shows a principle view of a generator,
- figure 3: shows a perspective view of the base plate and the cover without inserted magnets,
- figure 4: shows the magnet arrangement comprising the base plate, the cover and the inserted magnets, and
- figure 5: shows a cross-sectional view along the lines V-V in figure 4.

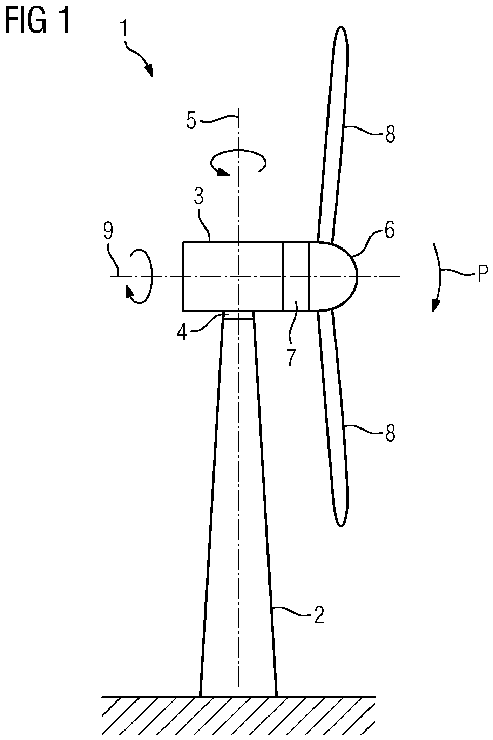

Figure 1 schematically illustrates a wind turbine 1 comprising a tower 2. At the top of the tower 2 a nacelle 3 is mounted. The nacelle 3 is rotatably connected with the tower via a yaw bearing arrangement 4. The yaw bearing arrangement 4 enables a rotational movement of the nacelle around the yaw axis 5 relative to the tower, wherein the yaw axis 5 is oriented substantially vertically.

A hub 6 is rotatably connected to the nacelle 3 by a main bearing. The hub 6 is a part of the so-called rotor, which rotor transfers the rotational energy from the hub 6 to a generator 7, which generator produces electric energy from the rotational energy. For rotating the hub 6 a plurality of rotor blades 8 are arranged at the hub, which rotor blades 8 can, it need be, be pitched relative to the hub. The hub 6 respectively the rotor blades 8 are rotatable around a substantially horizontal axis 9. The generator 7 is preferably directly connected to the rotor respectively the hub 6, the wind turbine 1 is therefore a direct-drive wind turbine. It is to be noted, that it is also possible to arrange a gear box between the rotor respectively the hub 6 and the generator 7.

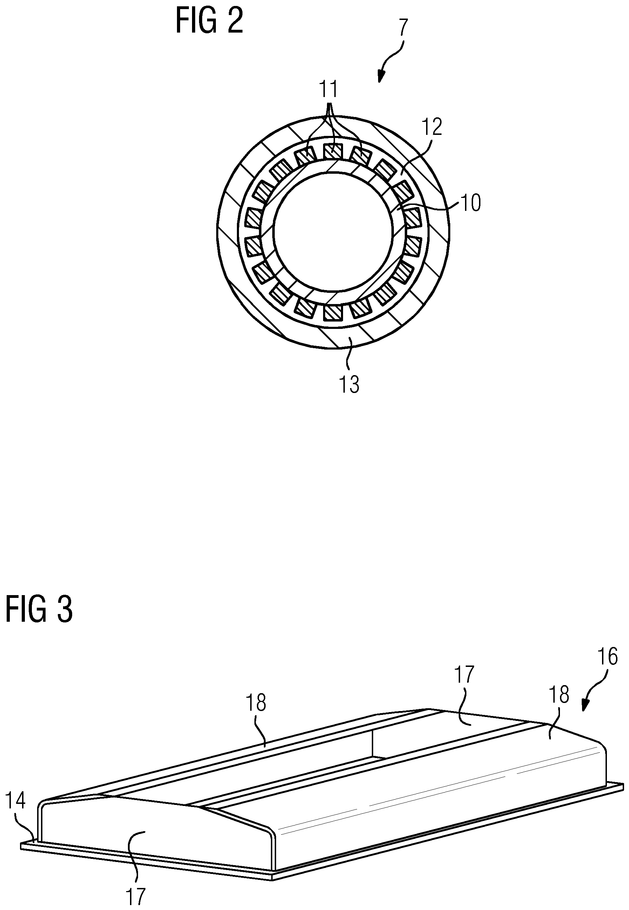

Figure 2 schematically shows a sectional view of the generator 7. The generator 7 comprises a rotor 10, to which outer circumference a number of magnet arrangements 11 is attached.

The magnet arrangements 11 are distanced via an air gap 12 from a stator arrangement 13. In operation the rotor 10 coupled to the hub 6 rotates within the stator arrangement 13, where the current is generated.

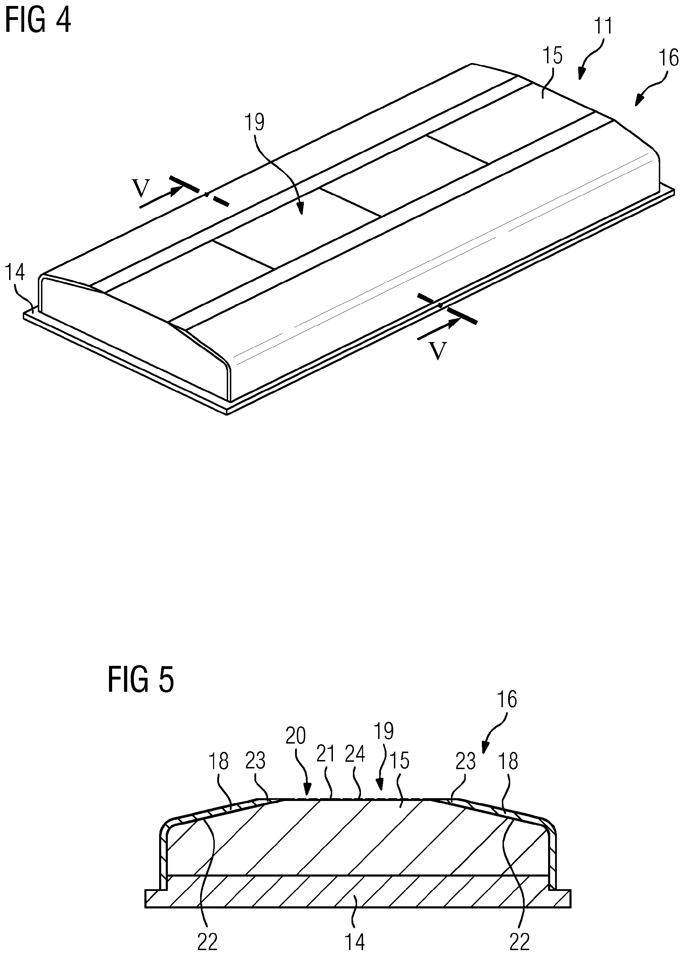

A perspective view of one of these inventive magnet arrangements 11 is shown in figure 4. It comprises a base plate 14, on which several, in this example four magnets 15 are arranged in a row. The magnets are preferably rare earth magnets, for example neodym-iron-bor magnets. The magnets are held in place by a cover 16 fixed to the base plate. The cover 16, see also figure 3, which shows only the base plate 14 and the cover 16, but not the magnets, comprises two front walls 17 covering the front surfaces of the terminal magnets 15. The cover 16 furthermore comprises two longitudinal cover parts 18 which, see figure 4, cover the longitudinal side surfaces of the magnets and extend and overlap partially over the upper surfaces of the magnets 15, but leave the center region 19 of the magnets 15 uncovered, as is clearly shown in figure 4. As figure 3 shows, the base plate 14, to which the magnets having a plane bottom surface may additionally be glued, and the cover 16 build a housing, in which the magnets are arranged and partially covered.

Figure 5 shows a cross-section along the lines V-V in figure 4. It shows the base plate 14 and the cover parts 18 of the cover 16. The upper surface 20 of each magnet 15 has a flat center area 21, from which the surface 20 slopes to both sides, the surface 20 is convex and/or angled, as figure 5 shows. Therefore, sloping side regions 22 connect to both sides of the center area 21.

As figure 5 shows, the cover parts 18 cover or overlap the magnet 15 only in the sloped side regions 22, but not in the center area 21, leaving a center region 19 uncovered. It is to be noted, that figure 5 is only a principle sketch showing the overlap. The overlap may be way smaller than shown. The cover 16 respectively the cover parts 18 may overlap the magnets 15 in each side region 22 by less than 20 % of the total width of the respective magnet 15, especially by less than 10 % and preferably by less than 5 % of the total width of the magnet. Only a few millimeters or centimeters of overlap are sufficient for retaining the magnets 15 on the base plate 14.

As figure 5 also shows each cover part 18 tapers at its free end 23, so that there is a smooth transition from each cover part 18 to the upper magnet surface 20 without any sharp edges in these areas.

The cover 16 respectively the cover parts 18 are preferably made of stainless steel sheet having a thickness of between 0.5 - 0.7 mm. As the center region 19, which as said above may be way wider than shown in the figures is uncovered, this center region 19 may be arranged closer to the opposite generator means, thus reducing the air gap at least by the thickness of the cover, which in prior art arrangements covered the whole magnet.

The cover 16 is preferably welded to the base plate 14, which is preferably also made of stainless steel sheet.

As shown in figure 5 by the dashed line, optionally a corrosion protective coating 24 may be applied to the upper surface 20 at least in the uncovered center region 19. This protective coating may be a paint, a lacquer or a polymer coating. It is applied as thin as possible with a thickness of only a view pm. This additional corrosion protective coating 24 allows for a complete corrosion protection of the magnets 15, as also the cover 16 made of stainless steel serves as a corrosion protective cover.

The figures are only principle sketches. It is to be noted that the magnet arrangement may certainly also comprise less or more than four magnets 15. Also, the upper surface geometry respectively the sloping geometry may be different. While figure 5 shows an upper surface 20 with a flat center area 21, to which angled flat surface areas connect, which turn into convex areas running down to the bottom of the magnet, it is to be understood, that either the whole upper surface 20 is convex, or that the surface 20 is defined only by flat angled areas etc. In any embodiment the upper surface slopes to the sides of the magnet, thus allowing the cover 16 respectively the cover parts 18 to overlap the magnet 15 in the side regions 22 which are lower than the center region 19, so that the cover 16 is not closer to the opposite generator means and therefore does not delimit the air gap.

Although the present invention has been described in detail with reference to the preferred embodiment, the present invention is not limited by the disclosed examples from which the skilled person is able to derive other variations without departing from the scope of the invention.

## Claims

1. Magnet arrangement for an electric generator (7), comprising at least one magnet (15) arranged on a base plate (14) and a fixation cover (16) fixed to the base plate (14) and covering the magnet (15) on its upper surface (20) for holding it in place, **characterized in that** the cover (15) covers the magnet (15) having a convex and/or angled upper surface (20) sloping to both sides of the magnet (15) only in the sloping side regions (22) while the center region (19) of the magnet (15) is uncovered.

2. Magnet arrangement according to claim 1, **characterized in that** the cover (16) overlaps the magnet (15) in each side region (22) for less than 20% of the total width of the magnet (15), especially for less than 10% and preferably for less than 5% of the total width of the magnet (15).

3. Magnet arrangement according to claim 1 or 2, **characterized in that** side edges (23) of the cover (16) are tapered.

4. Magnet arrangement according to one of the preceding claims, **characterized in that** two or more magnets (15) having the same geometry are arranged on the base plate (14) and are all covered by one cover (16).

5. Magnet arrangement according to one of the preceding claims, **characterized in that** the cover (15) has a thickness between 0,4 - 1 mm, especially between 0,5 - 0,7 mm.

6. Magnet cover according to one of the preceding claims, **characterized in that** the cover (15) is welded to the base plate (14).

7. Magnet arrangement according to one of the preceding claims, **characterized in that** at least the uncovered enter region (19) of the or of each magnet (15) is covered by a corrosion protective coating (24).

8. Magnet arrangement according to claim 7, **characterized in that** the protective coating (24) is a paint or lacquer or a polymer coating.

9. Magnet arrangement according to one of the preceding claims, **characterized in that** the cover (16) also covers the front surfaces of the at least one magnet (15)

10. Generator, comprising several magnet arrangements (11) according to one or the preceding claims.

11. Wind turbine, comprising a generator (7) according to claim 10.
